# EUROPÄISCHE PATENTSCHRIFT

(11) **EP 0 890 526 B1**
(45) Veröffentlichungstag und Bekanntmachung des Hinweises auf die Patenterteilung: **16.01.2002**
(21) Anmeldenummer: 98112043.9
(22) Anmeldetag: 30.06.1998
(51) Int. Cl.: B65D 85/58, H01M 2/10

(54) **Verkaufsverpackung für Knopfzellen**
Sales package for button cells
Emballage de vente pour piles du type bouton

(30) Priorität: 10.07.1997 DE 29712139 U
(43) Veröffentlichungstag der Anmeldung: 13.01.1999
(73) Patentinhaber: VARTA Gerätebatterie GmbH, 30419 Hannover (DE)
(72) Erfinder: Werner, Peter, 91550 Dinkelsbühl (DE); Krampulz, Kurt-Peter, 73479 Ellwangen (DE); Schönlein, Dieter Helmut, Dr., 32805 Horn Bad Meinberg (DE); Hagel, Gerhard, 74405 Gaildorf (DE)
(74) Vertreter: Kaiser, Dieter Ralf, Dipl.-Ing.

(56) Entgegenhaltungen:
- AT-B- 339 497
- DE-A- 3 630 926
- US-A- 2 718 299
- US-A- 2 885 116
- US-A- 3 854 625
- US-A- 3 968 902

## Beschreibung

Für galvanische Elemente in Knopfzellenform existieren die verschiedensten Verpackungen. Beispielsweise sind aus der DE-OS 3630926 Durchdrückverpackungen bekannt; dabei ist die Knopfzelle in einer transparenten Kunststoff-Folie mit napfförmiger Ausprägung angeordnet, und der Napf ist durch eine aufgesiegelte Aluminiumfolie verschlossen.

Um eine derartige Knopfzelle in ein Gerät, beispielsweise in eine Uhr, einsetzen zu können, muß die Folie abgezogen werden oder die Zelle wird wie eine Tablette durch die Folie hindurchgedrückt. Im allgemeinen ist eine Mehrzahl solcher einzeln verpackter Knopfzellen in einer Faltschachtel angeordnet. Diese bekannte Verpackung von Einzelzellen ist aufwendig und insbesondere für den Uhrmacher, der ständig derartige Knopfzellen in Uhren einsetzt, nur schwer zu handhaben.

Aus der US-A-2885116 ist ein Tablettenspender in Form eines Füllhalters zu ennehmen, der einen röhrchenförmigen Aufnahmebehälter für eine Vielzahl übereinander gestapelter Tabletten enthält.

Der Erfindung liegt daher die Aufgabe zugrunde, eine Verpackung für Knopfzellen anzugeben, die eine einfache Handhabung der einzelnen Knopfzelle ermöglicht und die kostengünstig herstellbar ist.

Diese Aufgabe wird erfindungsgemäß bei einer Verkaufsverpackung für Knopfzellen durch die Merkmale des kennzeichnenden Teils des Anspruchs 1 gelöst. Weitere bevorzugte Ausgestaltungen der Erfindung sind in den Unteransprüchen angegeben.

Der Aufnahmebehälter für die Knopfzellen ist erfindungsgemäß in einer äußeren Verpackung angeordnet, die einen Ausstoßmechanismus für die Abgabe der einzelnen Zellen aus dem Aufnahmebehälter besitzt. Dieser Ausstoßmechanismus ist ähnlich aufgebaut wie der Vorschubmechanismus eines Druckbleistiftes.

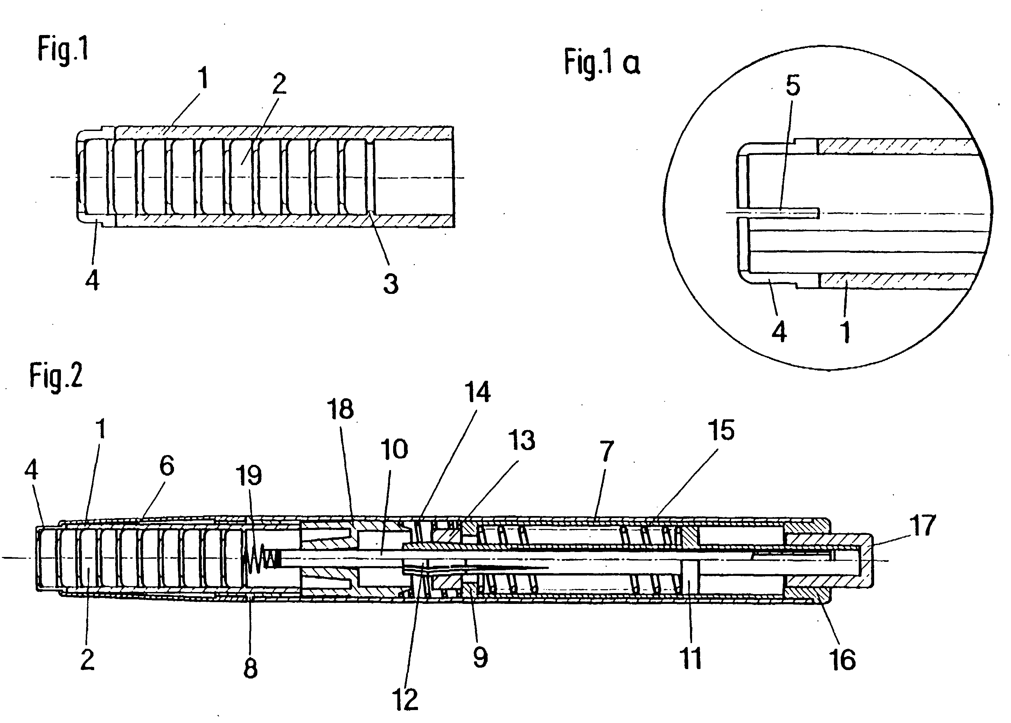

Im folgenden ist der Gegenstand der Erfindung anhand der Figuren 1 und 2 näher erläutert. Figur 1 zeigt einen erfindungsgemäßen rohrförmigen Aufnahmebehälter. Figur 2 zeigt den in der äußeren Verpackung angeordneten Aufnahmebehälter.

Gemäß Figur 1 besteht die Verkaufsverpackung aus einem Röhrchen 1, welches mehrere aufeinandergestapelte Knopfzellen 2 aufnimmt. Das Röhrchen selbst besteht insbesondere aus einem Kunststoffmaterial.

An einem Ende dieses Röhrchens 1 ist eine Haltevorrichtung für die Knopfzellen in Form einer vorspringenden Sicke 3 vorgesehen, am anderen Ende ist die Röhrchenöffnung als Federelement 4 ausgelegt und konisch zulaufend ausgebildet. Beispielsweise kann in diesem Bereich die Wanddicke des Röhrchens geringer sein und durch die Ausbildung von Einschnitten 5 (Figur 1a) fedemd ausgebildet werden.

Der Außendurchmesser des Aufnahmeröhrchens 1 ist für die verschiedenen Knopfzellendurchmesser vorzugsweise gleich, der Innendurchmesser des Aufnahmeröhrchen ist dem Außendurchmesser der zu verpackenden Knopfzellen angepaßt.

Erfindungsgemäß ist dieses Aufnahmeröhrchen 1 in einer äußeren Verpackung angeordnet, die einen Ausstoßmechanismus für die Abgabe von Einzelzellen aus dem Aufnahmebehälter besitzt.

Die erfindungsgemäße Vorrichtung besteht aus einem Vorderteil 6 und einem Schaftteil 7, die durch eine Schraubverbindung 8 in Form einer eingepreßten Gewindebuchse und einer Gewindeschraube miteinander verschraubt sind. Die äußere Ummantelung sowohl des Vorderteils 6 als auch des Schaftteils 7 besteht vorzugsweise aus Edelstahl.

Im Schaftteil 7 befindet sich ein Ausstoßmechanismus für die Knopfzellen 2, der ähnlich aufgebaut ist wie der Vorschubmechanismus in einem Druckbleistift. Der Ausstoßmechanismus besteht im wesentlichen aus einer im Schaftteil 7 angeordneten Führungshülse 9, in der eine Vorschubstange 10 angeordnet ist. Die Vorschubstange 10 ist in einer Backenzange 11 (Vierbackenzange) gehaltert. Über die Klemmbacken 12 dieser Backenzange 11 ist ein beweglicher Klemmring 13 geschoben, der mittels einer Feder 14 gehalten wird und der, je nach seiner Stellung in Bezug auf die Backenzange, die Klemmbacken 12 freigeben kann. Die im Klemmacken 12 der Backenzange 11 gehaltene Vorschubstange 10 wird durch die Druckfeder 15 ständig gegen die Haltebuchse 16 gedrückt.

Bei Druck auf den Drücker 17 wird die Backenzange 11 in Richtung auf die Knopfzellen 2 bewegt und zwar um maximal den Abstand zwischen dem Klemmring 13 und der Führungsbuchse 18. Sobald der Klemmring 13 an die Führungsbuchse 18 anstößt, wird der Klemmring 13 festgehalten, die Backenzange 11 bewegt sich weiter vorwärts und wird dabei gelöst.

Bei Freigabe des Drückers 17 bleibt die Vorschubstange 10 in der Führungshülse 18 eingeklemmt, die Backenzange 11 bewegt sich zusammen mit dem Klemmring 13 zurück, und bei Anschlag des Klemmringes 13 in seiner Endstellung werden die Klemmbacken 12 der Backenzange 11 wieder geschlossen und die Vorschubstange 10 wird wieder festgehalten. Ein solcher Ausstoßvorgang kann bis zum Austritt sämtlicher Knopfzellen 2 wiederholt werden.

Am vorderen Ende der Vorschubstange 10 ist eine Druckfeder 19 befestigt. Diese Druckfeder 19 hat die Aufgabe, die übereinandergeschichteten Batterien zusammenzuhalten, und sie bewirkt die Kraftübertragung der Vorschubstange 10 auf die Knopfzellen, die bei jeder Druckbetätigung um eine Batteriehöhe bewegt werden und aus der Verpackung austreten.

Der Hub der Ausstoßvorrichtung wird durch den Abstand zwischen Klemmring 13 und Führungsbuchse 18 bestimmt. Dieser Abstand wird eingestellt durch die Länge des Aufnahmeröhrchens 1, die je nach der Höhe der verwendeten Knopfzellen 2 verschieden ist.

Sobald sämtliche Knopfzellen aus dem Aufnahmeröhrchen ausgestoßen sind, können Vorderteil 6 und Schaft 7 der Verpackung durch Aufschrauben voneinander getrennt werden, und in das Vorderteil kann ein neues Verpackungsröhrchen, welches mit Knopfzellen gefüllt ist, eingesetzt werden.

## Patentansprüche

1. Verkaufsverpackung für Knopfzellen, die einen röhrchenförmigen Aufnahmebehälter (1) für eine Vielzahl übereinander gestapelter Knopfzellen (2) enthält, der in einer äußeren Verpackung (6, 7) angeordnet ist, die einen Ausstoßmechanismus in Form einer von einer Backenzange (11) gehaltenen Vorschubstange (10), die durch einen Drücker (17) für eine definierte Weglänge in das Aufnahmeröhrchen (1) einschiebbar ist, für die Abgabe von einzelnen Zellen (2) aus dem Aufnahmeröhrchen (1) besitzt, **dadurch gekennzeichnet dass** der maximale Vorschub bei einmaligem Betätigen des Drückers (17) durch den Abstand zwischen einem die Backenzange (11) festlegenden Klemmring (13) und einer Führungshülse (18) bestimmt ist, dass die Führungshülse (18) verschiebbar in der äußeren Verpackung (6, 7) angeordnet ist und dass ihre Stellung in der aüßeren Verpackung (6, 7) durch den Rand des Aufnahmeröhrchens (1) bestimmt ist.

2. Verkaufsverpackung nach den Anspruch 1, **dadurch gekennzeichnet, dass** die äußere Verpackung aus einem Vorderteil (6) mit dem Aufnahmeröhrchen (1) und einem Schaftteil (7) mit dem Ausstoßmechanismus besteht, die miteinander verschraubt sind.

3. Verkaufsverpackung nach Anspruch 1 oder 2, **dadurch gekennzeichnet, dass** das an den Knopfzellen (2) anliegende Ende der Vorschubstange (10) mit einer Druckfeder (19) versehen ist.

4. Verkaufsverpackung nach einem der Ansprüche 1 bis 3, **dadurch gekennzeichnet, dass** das Aufnahmeröhrchen (1) im Bereich eines Endes mit einer nach innen vorspringenden Sicke (3) versehen ist.

5. Verkaufsverpackung nach einem der Ansprüche 1 bis 4, **dadurch gekennzeichnet, dass** das Aufnahmeröhrchen an einem Ende federnd und konisch zulaufend ausgebildet ist.

## Claims

1. Sales pack for button cells, which contains a tubular accommodating container (1) for a multiplicity of button cells (2) stacked one above the other, the accommodating container being arranged in outer packaging (6, 7) which has an ejecting mechanism in the form of an advancement rod (10), which is retained by a jaw-type gripper (11) and can be pushed into the accommodating tube (1) over a defined length by a pusher (17) for the purpose of discharging individual cells (2) from the accommodating tube (1), **characterized in that** the maximum advancement when the pusher (17) is actuated once is determined by the distance between a clamping ring (13), which secures the jaw-type gripper (11), and a guide sleeve (18), **in that** the guide sleeve (18) is arranged displaceably in the outer packaging (6, 7), and **in that** its position in the outer packaging (6, 7) is determined by the border of the accommodating tube (1).

2. Sales pack according to Claim 1, **characterized in that** the outer packaging comprises a front part (6) with the accommodating tube (1) and a shank part (7) with the ejecting mechanism, these being screwed to one another.

3. Sales pack according to Claim 1 or 2, **characterized in that** that end of the advancement rod (10) which butts against the button cells (2) is provided with a compression spring (19).

4. Sales pack according to one of Claims 1 to 3, **characterized in that** the accommodating tube (1) is provided with an inwardly projecting bead (3) in the region of one end.

5. Sales pack according to one of Claims 1 to 4, **characterized in that** the accommodating tube is of resilient and conically tapering design at one end.

## Revendications

1. Conditionnement de vente pour des piles bouton comprenant un réceptacle tubulaire (1) recevant plusieurs piles bouton (2) empilées, et qui se place dans un conditionnement extérieur (6, 7) équipé d'un mécanisme d'éjection sous la forme d'une tige poussoir (10) tenue par un élément de blocage (11) et que l'on enfonce d'une course déterminée dans le réceptacle tubulaire (1) en agissant sur un bouton poussoir (17) pour distribuer une à une les piles (2) du réceptacle tubulaire (1),
**caractérisé en ce que**
l'avancée maximale pour un seul actionnement du bouton poussoir (17) est définie par la distance entre un anneau de serrage (13) fixant l'élément de serrage (11) et un manchon de guidage (18) de façon à faire coulisser le manchon de guidage (18) dans le conditionnement extérieur (6, 7), et sa position dans le conditionnement extérieur (6, 7) est définie par le bord du réceptacle tubulaire (1).

2. Conditionnement selon la revendication 1,
**caractérisé en ce que**
le conditionnement extérieur se compose d'une partie avant (6) avec un réceptacle tubulaire (1) et une partie formant tige (7) avec un mécanisme d'éjection, ces deux parties étant vissées l'une à l'autre.

3. Conditionnement selon l'une quelconque des revendications 1 ou 2,
**caractérisé en ce que**
l'extrémité de la tige poussoir (10) appliquée contre les piles bouton (2) comporte un ressort de compression (19).

4. Conditionnement selon l'une quelconque des revendications 1 à 3,
**caractérisé en ce que**
le réceptacle tubulaire (1) est muni d'une nervure intérieure (3), en saillie au niveau de son extrémité.

5. Conditionnement selon l'une quelconque des revendications 1 à 4,
**caractérisé en ce que**
le réceptacle tubulaire a une extrémité élastique, qui se rétrécit suivant une forme conique.
